# EUROPÄISCHE PATENTANMELDUNG

(11) **EP 2 722 158 A1**
(43) Veröffentlichungstag der Anmeldung: **23.04.2014**
(21) Anmeldenummer: 13004983.6
(22) Anmeldetag: 18.10.2013
(51) Int. Cl.: B29C 65/34, F16L 9/12, F16L 13/02, F16L 21/00, F16L 47/03, F16L 47/06, H05B 3/48, B29L 23/00

(54) **Muffenverbindung**

(30) Priorität: 19.10.2012 DE 102012110018
(71) Anmelder: Severyns, Horst, 53844 Troisdorf (DE)
(72) Erfinder: Severyns, Horst, 53844 Troisdorf (DE)
(74) Vertreter: Fritz, Edmund Lothar

(57) **Zusammenfassung**

Die vorliegende Erfindung betrifft eine Muffenverbindung für Kunststoffrohre und - rohrformteile, insbesondere Kunststoffrohre und -rohrformteile für die Lüftungstechnik, umfassend wenigstens ein Muffenelement (11), wenigstens ein endseitig in das Muffenelement einschiebbares Rohrelement (10) und wenigstens ein Heizwendelelement (12) zum elektrischen Verschweißen von Rohrelement und Muffenelement in einem Verbindungsbereich, in dem sich Rohrelement und Muffenelement axial überlappen, wobei das Heizwendelelement in einen in dem Verbindungsbereich vorgesehenen Ringspalt zwischen dem Rohrelement und dem Muffenelement einbringbar ist. Das Heizwendelelement (12) ist eine in den Ringspalt zwischen Rohrelement und Muffenelement einschiebbare formstabile Einsteckschürze aus Kunststoff, in den Heizdrähte (14) eingebettet sind. Diese Einsteckschürze umfasst einen achsparallelen etwa zylindrischen Einsteckabschnitt (12 a) sowie einen das Ende des Muffenelements übergreifenden Festlegungsabschnitt (12 b, 12 c), der im Längsschnitt etwa eine L-Form aufweist. Erfindungsgemäß wird eine Muffenverbindung für Kunststoffrohre bereitgestellt, bei der eine qualitativ hochwertige Schweißverbindung zwischen Rohrelement (10) und Muffenelement (11) herstellbar ist.

## Beschreibung

Die Neuerung betrifft eine Muffenverbindung für Kunststoffrohre und -rohrformteile, insbesondere Kunststoffrohre und -rohrformteile für die Lüftungstechnik, umfassend wenigstens ein Muffenelement, wenigstens ein endseitig in das Muffenelement einschiebbares Rohrelement und wenigstens ein Heizwendelelement zum elektrischen Verschweißen von Rohrelement und Muffenelement in einem Verbindungsbereich, in dem sich Rohrelement und Muffenelement axial überlappen, wobei das Heizwendelelement in einen in dem Verbindungsbereich vorgesehenen Ringspalt zwischen dem Rohrelement und dem Muffenelement einbringbar ist, wobei das Heizwendelelement als eine in den Ringspalt zwischen Rohrelement und Muffenelement einschiebbare formstabile Einsteckschürze aus Kunststoff ausgebildet ist, in den Heizdrähte eingebettet sind und wobei die Einsteckschürze einen in den Ringspalt zwischen Rohrelement und Muffenelement einsteckbaren achsparallelen etwa zylindrischen Einsteckabschnitt aufweist sowie einen das Ende des Muffenelements übergreifenden Festlegungsabschnitt.

In der Schweizer Patentschrift CH 504 642 ist eine aus Kunststoff bestehende Verbindungsmuffe für Kunststoffleitungen beschrieben. Hier wird das Rohrelement, dessen Endbereich in das Muffenelement eingeschoben wird, mit Hilfe einer Wendel aus isoliertem Draht verschweißt, die in einen Ringspalt zwischen Rohrelement und Muffenelement eingeschoben wird. Die Wendel besteht aus isoliertem Draht, der jedoch nicht in Kunststoff eingebettet ist. An der Heizwendel befinden sich Drahtenden für die elektrische Zuleitung. Da diese mit Steckern versehenen Drahtenden beim Einschieben des Heizelements radial nach außen überstehen, ist es erforderlich, an der Muffe einen sich in achsparalleler Richtung erstreckenden Spalt vorzusehen, durch den diese Drahtenden nach außen geführt werden können. Da das Heizwendelelement hier ein reiner Heizdraht ist, kann auf diese Weise nur der beim Erwärmen aufschmelzende Kunststoff von Muffe und Rohr Schmelzematerial für die Schweißverbindung liefern. Zudem ist auch ein spiralförmig gebogener Draht nicht formstabil, so dass es insbesondere bei einem vergleichsweise engen Ringspalt zu Verschiebungen der Heizdrahtschleifen untereinander und zu einer ungleichmäßigen nicht achsparallelen Anordnung des Heizdrahts im Ringspalt kommen kann. Dies führt nicht zu einer homogenen gleichmäßigen belastbaren Schweißverbindung, die den in der Praxis geforderten Anforderungen genügt.

Die Schweizer Patentschrift CH 336 980 A beschreibt ein Verfahren zum Zusammenschweißen von Rohrleitungselementen aus Kunststoff umfassend ein Muffenelement, welches dort als Kunststofffitting bezeichnet wird, ein im Außendurchmesser kleineres Kunststoffrohr und ein in den Ringspalt zwischen Muffenelement und Kunststoffrohr einschiebbares Verbindungselement, in das ein Heizelement eingebettet ist. Das Verbindungselement ist hier jedoch rein zylindrisch ausgebildet, so dass dieses beim Einschieben in die Bohrung des Muffenelements außen am Ende des Muffenelements keinen Anschlag findet. Diese bekannte Lösung setzt somit voraus, dass das Verbindungselement eine solche axiale Länge aufweist, die genau der Länge einer abgestuften Bohrung des Muffenelements entspricht und die Länge des Einschubwegs des Verbindungselements durch den Ringabsatz der Stufenbohrung in dem Muffenelement begrenzt wird. Außerdem ergibt sich nach dem Einschieben des Verbindungselements in das Muffenelement keine gegenseitige Festlegung dieser beiden Bauteile gegeneinander, so dass die Gefahr besteht, dass das Verbindungselement verrutscht, bevor die Schweißverbindung hergestellt ist.

In der US-Patentschrift US 4,266,997 A ist eine Muffenverbindung mit den Merkmalen der eingangs genannten Gattung beschrieben, bei der ein Rohrelement in ein als Hülse ausgebildetes Muffenelement eingeschoben wird und in den Ringspalt zwischen diesen beiden Bauteilen ein Heizwendelelement eingeschoben wird, welches endseitig einen radial nach außen hin abgewinkelten Schenkel aufweist, so dass dadurch hier eine Art Anschlag gegeben ist, der eine Endposition des Heizwendelelements gegenüber dem hülsenförmigen Muffenelement definiert. Bei dieser bekannten Muffenverbindung wird jedoch über das hülsenförmige Muffenelement noch ein weiteres Buchsenelement geschoben, welches das Muffenelement konzentrisch umschließt. Dieses Buchsenelement hat eine größere axiale Länge als das Muffenelement, so dass nach dem Verbinden das stirnseitige Ende des Muffenelements innen liegt mit Abstand von dem stirnseitigen Ende des Buchsenelements. Nach dem Aufschieben des Buchsenelements ist folglich das stirnseitige Ende des Muffenelements nicht mehr sichtbar und es besteht keine Kontrolle hinsichtlich der relativen axialen Position der Bauteile zueinander, denn das Muffenelement kann beispielsweise in dem äußeren Buchsenelement vor der Herstellung der Schweißverbindung axial nach außen rutschen, wobei sich auch die relative Position des innersten Rohrelements gegenüber dem äußeren Buchsenelement verschiebt. Außerdem muss hier mittels des Heizwendelelements eine Verbindung zwischen insgesamt vier konzentrisch ineinander geschobenen Bauteilen hergestellt werden. Dies bedeutet, dass über das Heizwendelelement das dieses umgebende Muffenelement in seiner gesamten Materialstärke aufgeschmolzen werden muss, damit eine Schweißverbindung mit dem äußeren Buchsenelement entsteht. Es ist zweifelhaft, dass dies gelingt, so dass die Gefahr besteht, dass keine axial durchgehende zuverlässige Schweißverbindung zwischen dem inneren Rohrelement und dem äußeren Buchsenelement erhalten wird.

Hiervon ausgehend besteht die Aufgabe der vorliegenden Neuerung darin, eine Muffenverbindung für Kunststoffrohre mit den Merkmalen der eingangs genannten Gattung bereitzustellen, bei der eine qualitativ hochwertige Schweißverbindung zwischen Rohrelement und Muffenelement herstellbar ist.

Die Lösung hierfür liefert eine Muffenverbindung für Kunststoffrohre und -rohrformteile, insbesondere Kunststoffrohre und -rohrformteile für die Lüftungstechnik der eingangs genannten Art mit den Merkmalen des Anspruchs 1.

Erfindungsgemäß ist vorgesehen, dass der Festlegungsabschnitt der Einsteckschürze im Längsschnitt etwa eine L-Form aufweist.

Das Heizwendelelement ist somit eine in den Ringspalt zwischen Rohrelement und Muffenelement einschiebbare formstabile Einsteckschürze aus Kunststoff, in den Heizdrähte eingebettet sind, wobei der Festlegungsabschnitt einen Endanschlag bei zwischen Muffenelement und Rohrelement eingestecktem Heizwendelelement definiert. Gleichzeitig ermöglicht dieser Festlegungsabschnitt des Heizwendelelements eine klemmende Festlegung des Heizwendelelements an dem Muffenelement, da der Festlegungsabschnitt das axiale Ende des Muffenelements übergreift.

Der achsparallele etwa zylindrische Einsteckabschnitt der Einsteckschürze greift in den Ringspalt zwischen Rohrelement und Muffenelement dort ein, wo eine Verschweißung beider Elemente erwünscht ist. Durch den Kunststoff des Einsteckabschnitts wird zusätzliches Material im Verbindungsbereich zur Verfügung gestellt, welches bei der Erwärmung über die Heizwendel aufschmilzt und mit dem Kunststoff des radial innen liegenden Rohrelements und des radial außen liegenden Muffenelements jeweils eine stoffschlüssige Verbindung eingeht.

Als Kunststoffe, aus denen Rohrelement, Muffenelement und Heizwendelelement (Einsteckschürze) bestehen können, kommen beispielsweise PE, PP, PVC, PPS, PP-EL, PE-EL oder ähnliche Materialien in Betracht, welche sich insbesondere für Rohrleitungen und Rohrformteile im Lüftungsbau eignen. Wegen der notwendigen Verschweißbarkeit wird man in der Regel jeweils gleiche Werkstoffe für Rohrelement und Muffenelement sowie Heizwendelelement verwenden, da die Verschweißung chemisch unterschiedlich aufgebauter Kunststoffe oft nicht möglich ist.

Gemäß einer bevorzugten Weiterbildung der erfindungsgemäßen Aufgabenlösung weist der Festlegungsabschnitt der Einsteckschürze wenigstens einen sich vom Einsteckabschnitt etwa rechtwinklig in radialer Richtung nach außen erstreckenden Schenkel auf. Dieser Schenkel verläuft dann hinter dem Ende des Muffenelements und kann als Anschlag für die Einsteckschürze dienen.

Der Festlegungsabschnitt der Einsteckschürze hat im Längsschnitt insgesamt etwa eine L-Form mit einem sich radial nach außen hin erstreckenden Schenkel und einem zu diesem etwa rechtwinklig verlaufenden und sich in entgegengesetzter Richtung zu dem Einsteckabschnitt und zu diesem etwa parallel erstreckenden achsparallelen äußeren Schenkel, welcher das Ende des Muffenelements übergreift. Ein Schenkel dient somit als Anschlag und der andere Schenkel übergreift das Ende des Muffenelements und erstreckt sich in die Gegenrichtung. Dadurch kann eine bessere Klemmwirkung der Einsteckschürze (Heizwendelelement) am Muffenelement erzielt werden.

Gemäß einer bevorzugten Weiterbildung der erfindungsgemäßen Aufgabenlösung hat der Festlegungsabschnitt eine Ringnut, die als Aufnahme für das axiale Ende des Muffenelements dient. Dieses axiale Ende des Muffenelements kann damit etwa formschlüssig in dieser Ringnut aufgenommen werden und beim Einschieben der Einsteckschürze entsteht eine gewisse Klemmwirkung. Die Einsteckschürze wird somit in der Endposition zwischen Muffenende und in die Muffe eingeschobenem Rohr gehalten. Die Muffe hat einen im Durchmesser erweiterten Endbereich, in den das Rohrende eingeschoben wird, wobei sich an diesen erweiterten Endbereich ein Muffenabschnitt mit dem gleichen Durchmesser anschließen kann wie der Endbereich des Rohrelements, so dass sich insgesamt eine Rohrleitung mit zwischen Rohrelement und Muffenelement etwa gleichbleibendem Innendurchmesser ergibt.

Um das Einschieben der Einsteckschürze in den Zwischenraum zwischen Rohrelement und Muffenelement zu erleichtern, kann gemäß einer bevorzugten Weiterbildung der erfindungsgemäßen Aufgabenlösung der Einsteckabschnitt der Einsteckschürze in seinem Einsteckendbereich eine Verjüngung oder Fase aufweist. Die Einsteckschürze läuft somit an ihrem vorderen Ende spitz zu und wird schmaler.

Weiterhin kann gemäß einer bevorzugten Weiterbildung der erfindungsgemäßen Aufgabenlösung beispielsweise das Heizwendelelement wenigstens zwei Anschlusselemente für den Anschluss der elektrischen Zuleitungen zu den Heizwendeln aufweisen, wobei sich diese Anschlusselemente bevorzugt an dem sich radial nach außen erstreckenden Schenkel des Festlegungsabschnitts befinden, wobei die Anschlusselemente bevorzugt an der dem Muffenelement abgewandten Seite des Festlegungselements angebracht sind. Bei diesen Anschlusselementen kann es sich um Klemmen unterschiedlicher Bauform handeln, an denen man eine Leitung zum Pluspol bzw. Minuspol einer Stromquelle anschließt. Es können auch Buchsen oder Stecker für die elektrischen Anschlüsse verwendet werden.

Gemäß einer bevorzugten Weiterbildung der erfindungsgemäßen Aufgabenlösung verlaufen die Heizwendeln in dem Heizwendelelement in voneinander jeweils beabstandeten spiralförmigen Windungen, d.h. anders als im Stand der Technik ist dann jede Windung in den Kunststoff der Einsteckschürze eingebettet, die Windungen liegen nicht unmittelbar aufeinander.

Es sollte weiterhin bevorzugt so sein, dass die Heizwendeln in der Einsteckschürze zu deren radialer Innenseite hin und/oder zu deren radialer Außenseite hin mit einer Schicht aus Kunststoff überdeckt sind, welcher durch die Erwärmung beim Schweißvorgang aufschmilzt, d.h., dass die Heizwendeln bevorzugt nicht an der Innenseite oder an der Außenseite des Heizwendelelements freiliegen, sondern in den Kunststoff eingebettet sind. Durch das Aufschmelzen dieses Kunststoffs wird Material verfügbar, welches in die Schweißverbindung eingeht.

Die Heizwendel können auch in mehreren spiralförmigen Abschnitten verlaufen oder beispielsweise zunächst geradlinig verlaufende Abschnitte haben, z.B. vom Pluspol kommend, die dann in eine Spiralform übergehen oder z.B. die Heizwendel verläuft erst spiralförmig und der zum Minuspol hin führende Endabschnitt der Heizwendel verläuft dann geradlinig.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Die vorliegende Erfindung wird nachfolgend anhand von Ausführungsbeispielen unter Bezugnahme auf die beiliegenden Zeichnungen näher beschrieben. Dabei zeigen
Figur 1 eine Ansicht einer erfindungsgemäßen Muffenverbindung im montierten Zustand;
Figur 2 einen Längsschnitt durch eine Muffenverbindung von Figur 1;
Figur 3 eine vergrößerte Detailansicht eines Ausschnitts aus Figur 2;
Figur 3a eine weitere Ansicht einer beispielhaften Muffenverbindung im montierten Zustand;
Figur 3c eine Ansicht, in der nur die Heizwendel für sich allein dargestellt ist;
Figur 4 eine Ansicht nur des Heizelements für sich allein dargestellt;
Figur 5 eine stirnseitige Ansicht des Heizelements von Figur 4.

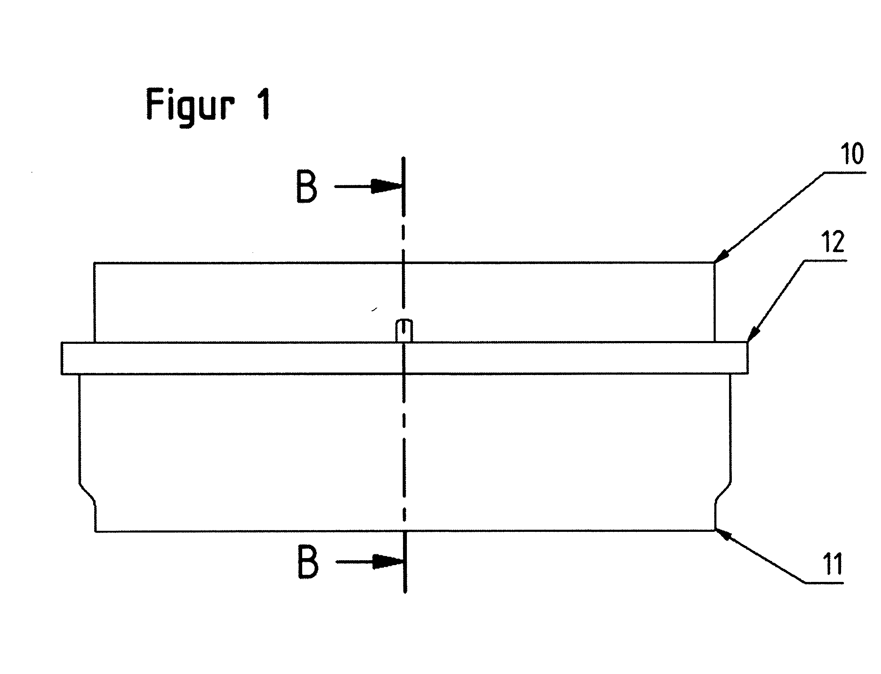

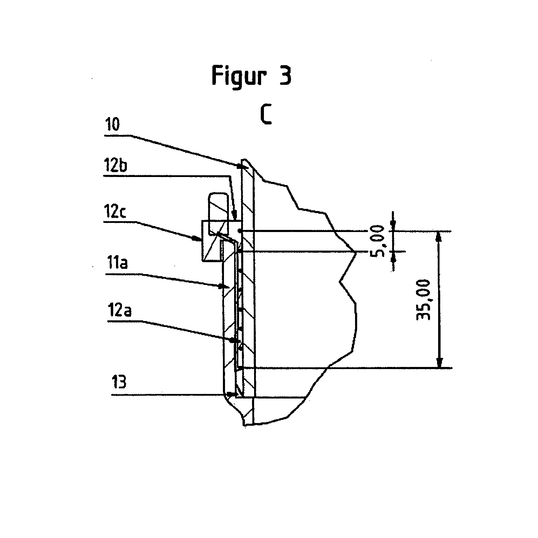

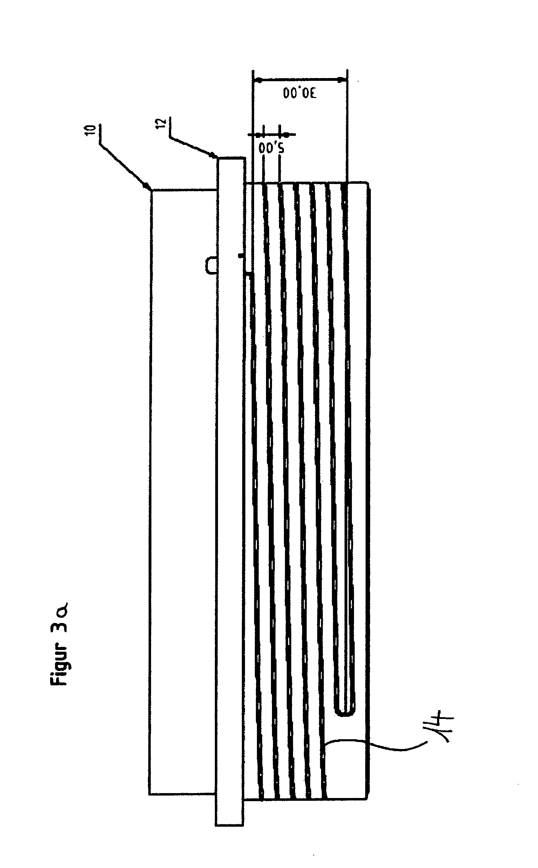

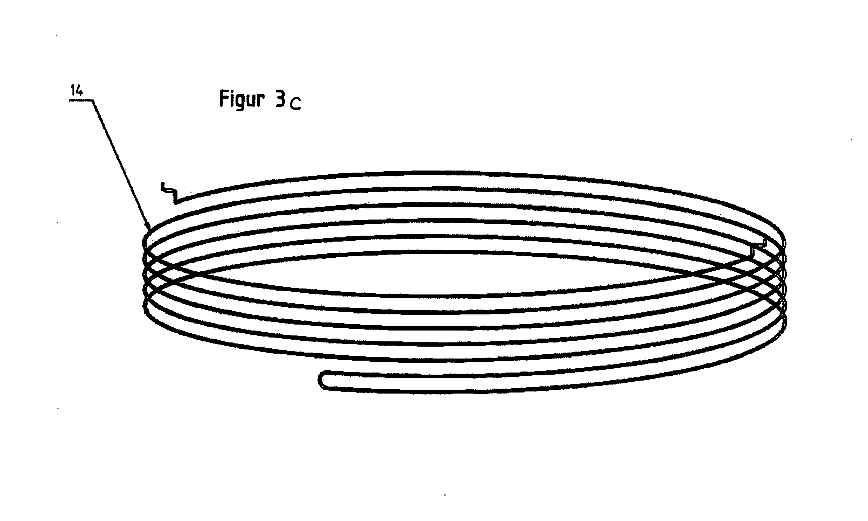

Zunächst wird auf Figur 1 Bezug genommen, welche eine Ansicht einer beispielhaften erfindungsgemäßen Muffenverbindung zeigt. Diese umfasst zum einen das zylindrische Rohrelement 10, von dem nur ein Endabschnitt dargestellt ist, sowie das in seinem Endbereich 11 a einen größeren Innen- und Außendurchmesser als das Rohrelement aufweisende Muffenelement 11, welcher im endseitigen Bereich das Rohrelement 10 übergreift, so dass sich ein Überlappungsbereich ergibt. In diesem Überlappungsbereich ist der Innendurchmesser des Muffenelements 11 so viel größer als der Außendurchmesser des Rohrelements 10, dass zwischen beiden ein Spalt verbleibt, den man insbesondere in der vergrößerten Detailansicht der Längsschnittdarstellung gemäß Figur 3 gut erkennen kann. In diesen Spalt wird ein Heizwendelelement 12 eingeschoben, welches als Einsteckschürze ausgebildet ist und dessen Materialstärke so ausgebildet ist, dass es sich problemlos in den Spalt einschieben lässt, wobei es sich idealerweise an dem Endabschnitt 11 a des Muffenelements 11 festklemmen lässt.

Dazu umfasst das Heizwendelelement, welches in der Regel aus dem gleichen Kunststoff besteht wie Rohrelement 10 und Muffenelement 11, einen langgestreckten Einsteckabschnitt 12 a, der an seinem vorderen Ende eine Fase 13 aufweisen kann, um das Einstecken in den Ringspalt zu erleichtern. Diese Fase 13 lässt das vordere Ende des Einsteckelements sich verjüngend spitz zulaufen. Am hinteren Ende des Einsteckabschnitts des Heizelements 12 schließt sich ein Festlegungsabschnitt an, der zum einen einen radial nach außen ragenden und somit rechtwinklig zu dem Einsteckabschnitt 12 a verlaufenden Schenkel 12 b umfasst, sowie einen von diesem ausgehend sich wiederum etwa in einem rechten Winkel in die Gegenrichtung und parallel zu dem Einsteckabschnitt 12 a erstreckenden achsparallelen äußeren Schenkel 12 c, so dass sich insgesamt im Längsschnitt für das Heizwendelelement 12 eine L-Form ergibt. Durch diese Form übergreift der Festlegungsabschnitt mit seinen beiden Schenkeln 12 b und 12 c in dem eingesteckten Zustand, der in den Figuren 1 bis 3 dargestellt ist, den Endabschnitt des Muffenelements 11, wodurch sich das Heizwendelelement an dem Muffenelement verklemmt und dadurch festgelegt ist.

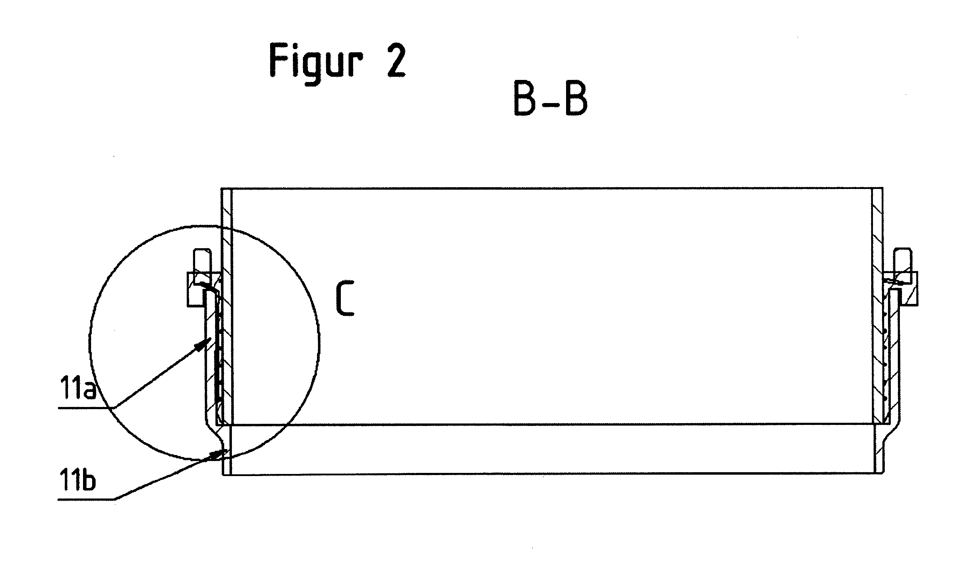

Aus Figur 2 erkennt man, dass das Muffenelement 11 vor seinem im Außen- und Innendurchmesser erweiterten Endabschnitt 11 a einen im Außen- und Innendurchmesser schmaleren Abschnitt 11 b aufweist, welcher insbesondere im Innendurchmesser so dimensioniert ist, dass dieser mit dem Innendurchmesser des Rohrelements 10 etwa übereinstimmt, so dass innenseitig der Abschnitt 11 b des Muffenelements 11 und das sich axial an diesen anschließende Rohrelement 10 eine durchgehende Rohrleitung mit etwa gleichbleibendem freien Querschnitt bilden. Bevorzugt werden Muffenelement 11 und Rohrelement 10 für Lüftungsrohrleitungen verwendet. Es muss sich dabei nicht um reine Rohrleitungsabschnitte handeln wie in dem vorliegenden Ausführungsbeispiel, sondern Rohrelement und Muffenelement können komplexere Bauelemente sein, beispielsweise Rohrformteile, Krümmer oder dergleichen, welche nach dem erfindungsgemäßen Prinzip jeweils endseitig miteinander verbunden und verschweißt werden.

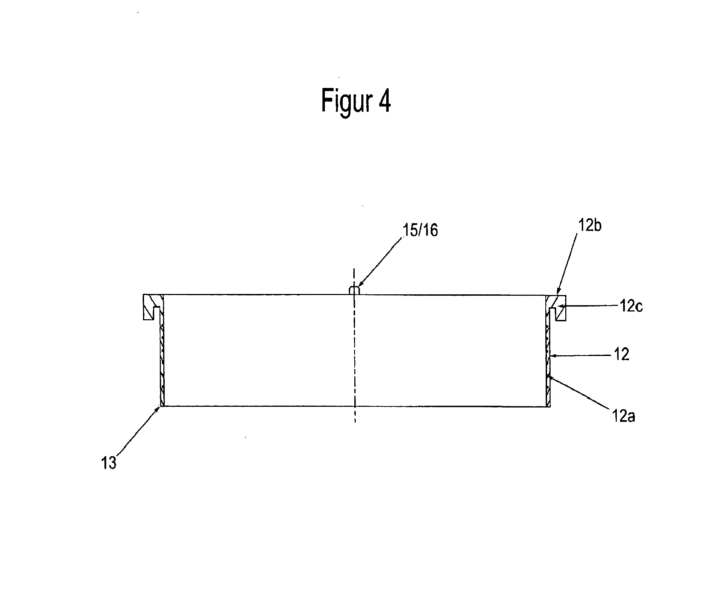

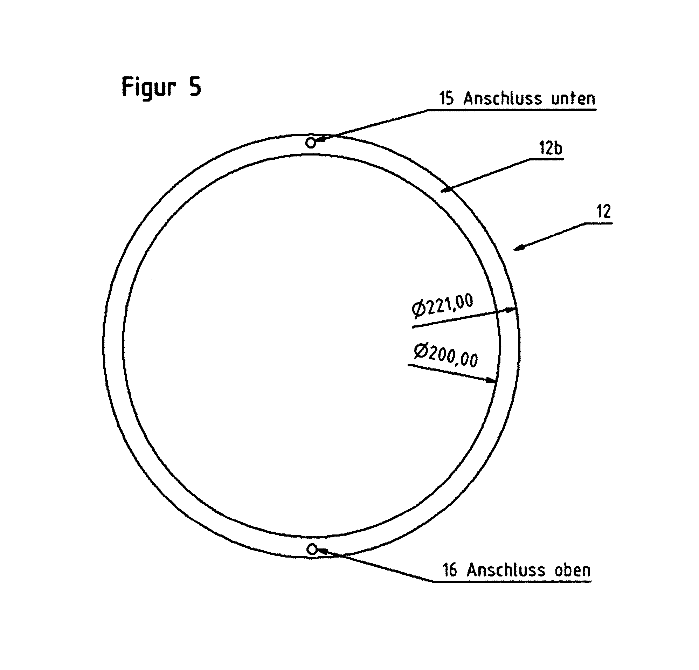

In den Figuren 4 und 5 ist das Heizwendelelement 12 für sich einmal in der Seitenansicht und einmal in einer stirnseitigen Ansicht dargestellt. Es handelt sich um ein ringförmiges Bauelement mit wie bereits zuvor beschrieben etwa L-förmigem Querschnitt. In den Kunststoff des Heizwendelelements sind spiralförmig verlaufende Heizdrähte 14 eingebettet, derart, dass sie sowohl radial innenseitig als auch radial außenseitig jeweils von einer dünnen Schicht Kunststoff überdeckt sind. Für die elektrischen Anschlüsse sind Anschlusselemente 15, 16 vorgesehen, die sich an der Oberseite auf dem radial nach außen ragenden Schenkel 12 b befinden. Dort können Verbindungsleitungen von einer Stromquelle, bei der es sich in der Regel um eine Gleichstromquelle handelt, angeschlossen werden, beispielsweise durch Einstecken oder Anklemmen von Leitungen. Es sind zwei Anschlusselemente 15, 16 für die beiden Pole der Versorgungsleitungen vorgesehen.

Die im Inneren des Heizwendelelements 12 spiralförmig verlegten Heizdrähte 14 werden dann bei Aufgeben einer Spannung erwärmt und schmelzen den Kunststoff des Heizwendelelements 12 auf sowie auch eine Teilschicht der beiden zu verbindenden Elemente, nämlich des Rohrelements 10 und des Muffenelements 11, wenn das Heizwendelelement 12 in die Muffenverbindung eingesteckt ist, so wie dies in Figur 3 gezeigt ist. Dadurch wird eine stoffschlüssige Verbindung zwischen allen drei Elementen hergestellt.

Man kann einfache oder doppelte zueinander versetzt verlaufende Heizwendeln verwenden. Gemäß einer Variante der Erfindung kann das als Einsteckschürze ausgebildete Heizwendelelement 12 auch aus einem Kunststoff hergestellt werden, der einen Anteil an einem Expandat (bei Erwärmung eine Volumenausdehnung des Kunststoffs bewirkende Substanz) enthält oder selbst entsprechende Volumenausdehnungseigenschaften aufweist. Auf diese Weise kann man den im Bereich der Verbindung zwischen Rohrelement und Muffenelement durch das Aufschmelzen des Kunststoffs des Heizwendelelements entstehenden Schweißdruck erhöhen und dadurch die gleichmäßige stoffschlüssige Verbindung zwischen Rohrelement und Muffenelement weiter verbessern.

Figur 3 a zeigt noch einmal eine Ansicht einer beispielhaften erfindungsgemäßen Muffenverbindung im montierten Zustand, wobei hier zur Veranschaulichung beispielhaft ein möglicher Verlauf des Heizdrahts 14 im Inneren des Heizwendelelements 12 eingezeichnet ist. Man sieht, dass der von einem der Anschlusselemente 15 kommende Heizdraht im Inneren des Heizwendelelements 12 von oben nach unten in Umfangsrichtung spiralförmig umlaufend in dem zylindrischen ringförmigen Korpus des Heizwendelelements verläuft, wobei er in dessen Kunststoff eingebettet ist. In der untersten Wendel (Windung) angekommen wird dann beispielsweise der Drehsinn der Wendel des Heizdrahts 14 umgekehrt und dieser wird dann entweder erneut in Wendeln oder in einem direkten geraden Abschnitt achsparallel zu dem zweiten Anschlusselement (in Figur 3 a nicht erkennbar, da auf der gegenüberliegenden Seite des Heizwendelelements liegend) zum oberen Ende des Heizwendelelements zurückgeführt.

Aus der perspektivischen Darstellung gemäß Figur 3c, in der nur ein Heizdraht dargestellt ist, ist der spiralförmige Verlauf des wendelförmigen Heizdrahts 14 noch besser erkennbar. Der Heizdraht beginnt oben von dem Anschlusselement kommend, läuft dann in umlaufenden Windungen bis nach unten, kehrt dann in seinem Verlauf um und verläuft dann erneut in Windungen im entgegengesetzten Drehsinn wieder nach oben bis zu dem anderen Anschlusselement.

### Bezugszeichenliste

- 10: Rohrelement
- 11: Muffenelement
- 11a: Endbereich des Muffenelements
- 11b: im Durchmesser verjüngter Bereich des Muffenelements
- 12: Heizwendelelement/Einsteckschürze
- 12a: Einsteckabschnitt
- 12b: radialer Schenkel
- 12c: äußerer achsparalleler Schenkel
- 13: Fase
- 14: Heizdrähte
- 15: Anschlusselement
- 16: Anschlusselement

## Patentansprüche

1. Muffenverbindung für Kunststoffrohre und -rohrformteile, insbesondere Kunststoffrohre und -rohrformteile für die Lüftungstechnik, umfassend wenigstens ein Muffenelement (11), wenigstens ein endseitig in das Muffenelement einschiebbares Rohrelement (10) und wenigstens ein Heizwendelelement (12) zum elektrischen Verschweißen von Rohrelement und Muffenelement in einem Verbindungsbereich, in dem sich Rohrelement und Muffenelement axial überlappen, wobei das Heizwendelelement (12) in einen in dem Verbindungsbereich vorgesehenen Ringspalt zwischen dem Rohrelement (10) und dem Muffenelement (11) einbringbar ist, wobei das Heizwendelelement (12) als eine in den Ringspalt zwischen Rohrelement und Muffenelement einschiebbare formstabile Einsteckschürze aus Kunststoff ausgebildet ist, in den Heizdrähte (14) eingebettet sind und wobei die Einsteckschürze einen in den Ringspalt zwischen Rohrelement (10) und Muffenelement (11) einsteckbaren achsparallelen etwa zylindrischen Einsteckabschnitt (12 a) aufweist sowie einen das Ende des Muffenelements übergreifenden Festlegungsabschnitt (12 b, 12 c), **dadurch gekennzeichnet, dass** der Festlegungsabschnitt der Einsteckschürze im Längsschnitt etwa eine L-Form aufweist.

2. Muffenverbindung für Kunststoffrohre und -rohrformteile nach Anspruch 1, **dadurch gekennzeichnet, dass** der Festlegungsabschnitt der Einsteckschürze im Längsschnitt wenigstens einen sich vom Einsteckabschnitt etwa rechtwinklig in radialer Richtung nach außen erstreckenden Schenkel (12 b) aufweist und einen zu diesem etwa rechtwinklig verlaufenden und sich in entgegengesetzter Richtung zu dem Einsteckabschnitt und zu diesem etwa parallel erstreckenden achsparallelen äußeren Schenkel (12 c), welcher das Ende des Muffenelements (11) übergreift.

3. Muffenverbindung für Kunststoffrohre und -rohrformteile nach einem der Ansprüche 1 oder 2, **dadurch gekennzeichnet, dass** der Festlegungsabschnitt (12 b, 12 c) eine Ringnut aufweist, die als Aufnahme für das axiale Ende des Muffenelements (11) dient.

4. Muffenverbindung für Kunststoffrohre und -rohrformteile nach einem der Ansprüche 1 bis 3, **dadurch gekennzeichnet, dass** der Einsteckabschnitt (12 a) der Einsteckschürze in seinem Einsteckendbereich eine Verjüngung oder Fase (13) aufweist.

5. Muffenverbindung für Kunststoffrohre und -rohrformteile nach einem der Ansprüche 1 bis 4, **dadurch gekennzeichnet, dass** das Heizwendelelement (12) wenigstens zwei Anschlusselemente (15, 16) für den Anschluss der elektrischen Zuleitungen zu den Heizwendeln (14) aufweist, wobei sich diese Anschlusselemente bevorzugt an dem sich radial nach außen erstreckenden Schenkel (12 b) des Festlegungsabschnitts befinden, wobei die Anschlusselemente bevorzugt an der dem Muffenelement (11) abgewandten Seite des Festlegungselements angebracht sind.

6. Muffenverbindung für Kunststoffrohre und -rohrformteile nach einem der Ansprüche 1 bis 5, **dadurch gekennzeichnet, dass** die Heizwendeln (14) i n dem Heizwendelelement (12) in voneinander jeweils beabstandeten spiralförmigen Windungen verlaufen.

7. Muffenverbindung für Kunststoffrohre und -rohrformteile nach einem der Ansprüche 1 bis 6, **dadurch gekennzeichnet, dass** die Heizwendeln (14) in der Einsteckschürze (12) zu deren radialer Innenseite hin und/oder zu deren radialer Außenseite hin mit einer Schicht aus Kunststoff überdeckt sind, welcher durch die Erwärmung beim Schweißvorgang aufschmilzt.

8. Muffenverbindung für Kunststoffrohre und -rohrformteile nach einem der Ansprüche 1 bis 7, **dadurch gekennzeichnet, dass** in der Einsteckschürze (12) mindestens eine mit dem Pluspol verbundene Heizwendel (14) spiralförmig vom Festlegungsabschnitt (12 b, 12 c) zum Ende des Einsteckabschnitts (12 a) hin und/oder mindestens eine mit dem Minuspol verbundene Heizwendel spiralförmig vom Ende des Einsteckabschnitts zum Festlegungsabschnitt hin verläuft.

9. Muffenverbindung für Kunststoffrohre und -rohrformteile nach einem der Ansprüche 1 bis 8, **dadurch gekennzeichnet, dass** das Muffenelement (11) einen endseitigen Abschnitt (11 a) mit größerem Durchmesser aufweist, der den Endabschnitt des Rohrelements (10) aufnimmt, wobei sich an den endseitigen Abschnitt (11 a) ein im Durchmesser verringerter Abschnitt (11 b) anschließt, dessen Innendurchmesser etwa dem Innendurchmesser des Rohrelements (10) entspricht.
